# EUROPÄISCHE PATENTANMELDUNG

(11) **EP 0 878 701 A2**
(43) Veröffentlichungstag der Anmeldung: **18.11.1998**
(21) Anmeldenummer: 98107773.8
(22) Anmeldetag: 29.04.1998
(51) Int. Cl.: G01N 15/02

(54) **Verfahren zur Bestimmung der in einem gasförmigen oder flüssigen Trägermedium enthaltenen Partikel**

(30) Priorität: 03.05.1997 DE 19718875
(71) Anmelder: H & W Optical Instruments GmbH, 07745 Jena (DE)
(72) Erfinder: Hertel, Martin, Dr., 07749 Jena (DE); Wappler, Torsten, 07743 Jena (DE)
(74) Vertreter: Findeisen, Andreas

(57) **Zusammenfassung**

Die Erfindung betrifft ein Verfahren zur Bestimmung der in einem gasförmigen oder flüssigen Trägermedium enthaltenen Partikel mittels Streulichtmessung. Es wird die Aufgabe gelöst, ein Verfahren zu schaffen, mit dem sehr kleine Partikelgrößen ermittelt und außerdem Aussagen zur geometrischen Form der Partikel getroffen werden können. Dies wird erreicht, indem mindestens drei, auf ein Meßvolumen gerichtete Lichtquellen und mindestens drei Detektoren gleichzeitig betrieben und die von den Detektoren erfaßten Streulicht-Meßwerte korreliert ausgewertet werden.

## Beschreibung

Die Erfindung betrifft ein Verfahren zur Bestimmung der in einem gasförmigen oder flüssigen Trägermedium enthaltenen Partikel mittels Streulichtmessung.

Die Streulichtmessung ist ein allgemein bekanntes Verfahren, um die in Aerosolen oder in durchsichtigen Flüssigkeiten enthaltenen Teilchen zu detektieren und zu klassifizieren. Bei der Streulichtmessung wird ein Lichtstrahl von einer Lichtquelle auf das zu analysierende gasförmige oder flüssige Trägermedium gerichtet. Wenn dieser Lichtstrahl auf ein Partikel im Trägermedium trifft, wird er gestreut. Das Streulicht wird von einem Detektor gemessen. Auf Grundlage dieser Daten lassen sich Aussagen zu verschiedenen Eigenschaften des Partikels treffen, zum Beispiel über Größe, Größenverteilung, Form und Lage.

Diese optische Partikelmeßtechnik findet insbesondere in Bereichen Anwendung, in denen kleine Partikel untersucht werden sollen, die mit konventionellen Verfahren nicht meßbar sind. Die bekannten Verfahren und Geräte beruhen weitgehend auf einfachen Methoden unter Ausnutzung der sogenannten Mie-Streuung. Eine solche technische Lösung ist Gegenstand von DE 43 41 573 C 1, die allerdings erhebliche Nachteile aufweist: Mit dieser optischen Meßanordnung wird lediglich der Anteil der Vorwärtsstreuung erfaßt. Die vorgeschlagene astigmatische Fokussierung bedingt einen Intensitätsverlust, so daß kleine Partikel überhaupt nicht erfaßt werden können. Da nur ein Detektor verwendet wird, sind auch keine Aussagen zur geometrischen Form der ermittelten Partikel möglich.

Das Verfahren und die Vorrichtung gemäß DE 44 14 166 C 1 realisieren die Messung der Lichtstreuung an Partikeln, indem in einem Rohrabschnitt mehrere nacheinander gepulste Lichtquellen sowie ein gemeinsamer Empfänger angeordnet sind. Jedoch weist auch diese technische Lösung mehrere Nachteile auf: Infolge der Verwendung von nur einem gemeinsamen Empfänger kann das durch die Wechselwirkung des Lichtes einer Lichtquelle mit dem Partikel entstehende Streulicht nur unter einem festen Raumwinkel detektiert werden. Durch das nacheinanderfolgende Pulsen der verschiedenen Lichtquellen ergeben sich zwar unterschiedliche Einstrahlwinkel auf das Meßvolumen. Dennoch wird keine winkelaufgelöste Messung des Streulichtes relativ zur Partikellage erreicht, weil durch die unterschiedlichen Bestrahlungswinkel bei den überwiegend nichtsphärischen Partikeln unterschiedliche Streuquerschnitte berücksichtigt werden. Demzufolge sind auch keine korrekten Aussagen zur Größe und Form der ermittelten Partikel möglich.

Eine winkelaufgelöste Streulichtmessung ist jedoch mit den Vorrichtungen der EP 0 182 618 A 2 und WO 90/10215 realisierbar, bei denen mehrere Detektoren jeweils ringförmig um das Meßvolumen angeordnet sind. Durch diese Streulichtmessung in verschiedenen Winkeln ist die Bestimmung der Mie-Parameter möglich, deren Kenntnis für die Bestimmung von Größe und Form der Partikel notwendig ist. Nachteilig ist allerdings die Festlegung nur einer definierten Streuebene und somit die Messung in genau dieser Ebene. Somit wird lediglich eine Winkelabhängigkeit (polar oder azimutal) betrachtet, während sämtliche Informationen über die Abhängigkeit vom anderen Winkel nicht berücksichtigt werden. Dieser Mangel ist zumindest bei nichtsphärischen Partikeln kritisch. Ferner steht durch die Verwendung von nur einer Lichtquelle auch nur mit einem Partikel lageabhängig ein bestimmter Streuquerschnitt zur Verfügung. Ist die Ausrichtung nichtsphärischer Partikel gleicher Form und Größe beim Durchgang durch das Meßvolumen jedoch unterschiedlich in Bezug auf die optische Achse des einfallenden Strahles, so werden mit diesen Anordnungen fälschlicherweise unterschiedliche Partikelgrößen festgestellt.

Eine Betrachtung in mehreren Streuebenen wird durch ein Partikelmeßgerät gemäß EP 0 493 806 A 2 ermöglicht. Bei diesem Gerät soll die ringförmige Detektoranordnung zur Messung größerer Partikel und die Anordnung der Detektoren unter größeren Winkeln zur Messung kleinerer Partikel verwendet werden. Die Betrachtung in mehreren Streuebenen wird aber überwiegend nur in Vorwärtsstreuung durch die ringförmige Detektoranordnung realisiert. Für größere Streuwinkel steht ebenso wie bei den bereits als Stand der Technik benannten Fundstellen für die Messung lediglich eine Streuebene zur Verfügung. Demzufolge ist mit diesem Gerät keine exakte Formbestimmung der Partikel möglich. Weiterhin ergeben sich auch bei dieser technischen Lösung die bereits oben dargelegten Nachteile infolge Verwendung von nur einer Lichtquelle.

Aufgabe der vorliegenden Erfindung ist es, ein Verfahren zur Bestimmung der in einem gasförmigen oder flüssigen Trägermedium enthaltenen Partikel unter Anwendung der Streulichtmessung zu schaffen, mit dem sehr kleine Partikelgrößen ermittelt werden können, insbesondere im Meßbereich unterhalb 0,1 µm. Weiterhin sollen durch das zu schaffende Verfahren auch Aussagen zur geometrischen Form der ermittelten Partikel erreicht werden.

Diese Aufgabe wird gemäß Patentanspruch 1 gelöst, indem mindestens drei, auf ein Meßvolumen gerichtete Lichtquellen und mindestens drei Detektoren gleichzeitig betrieben und die von den Detektoren erfaßten Streulicht-Meßwerte korreliert ausgewertet werden. Vorteilhafte Ausgestaltungen sind in den weiteren Patentansprüchen dargelegt.

Die wesentlichen Vorteile dieses Verfahrens gegenüber dem Stand der Technik bestehen darin, daß sehr kleine Partikel ermittelt werden können und außerdem Aussagen zur geometrischen Form der ermittelten Partikel erreicht werden.

Das vorgeschlagene Verfahren zur Bestimmung der in einem gasförmigen oder flüssigen Trägermedium enthaltenen Partikel kann mit verschiedenen Vorrichtungen unter Anwendung der Streulichtmessung realisiert werden. Unabhängig von der konkreten Konstruktion ist vorteilhaft, daß relativ wenig Bauraum benötigt wird. Somit kann das Verfahren insbesondere in Partikelmeßgeräten angewendet werden, deren Abmessung und Handhabung einen mobilen Einsatz unter verschiedenartigen Umgebungsbedingungen ermöglicht. In der Zeichnung ist beispielhaft eine Ausführungsform dargestellt, um den grundsätzlichen Verfahrensablauf zu verdeutlichen. Es zeigen:
- Fig. 1: den schematischen Aufbau einer Vorrichtung zur Anwendung des vorgeschlagenen Verfahrens
- Fig. 2: eine Einzelheit aus Fig. 1 aus dem Bereich des Meßvolumens und Abbildung eines Detektors

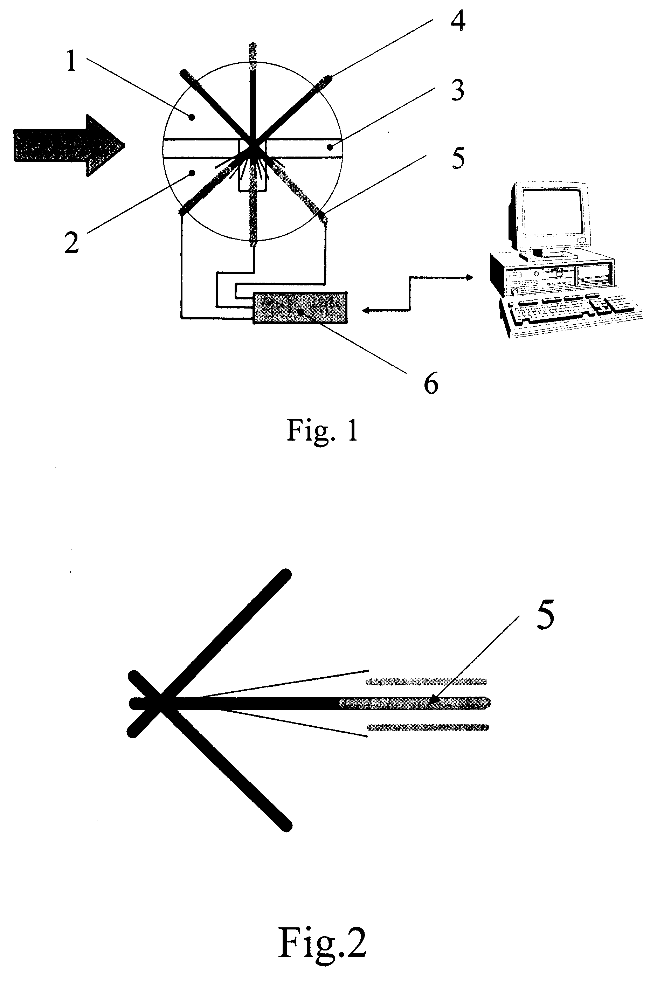

In Fig. 1 sind zwei halbkugelförmige Aufnahmeeinrichtungen 1 und 2 zu sehen, zwischen denen ein Zwischenraum 3 verbleibt. An der oberen Aufnahmeeinrichtung 1 sind drei Lichtquellen 4 befestigt. Als Lichtquellen 4 werden vorzugsweise Laserdioden verwendet. An der unteren Aufnahmeeinrichtung 2 sind drei Detektoren 5 angeordnet. Diesen Detektoren 5 sind jeweils Lichtfallen zugeordnet, die in Fig. 2 dargestellt sind. Die Detektoren 5 sind mit einer Auswerteeinheit 6 verbunden, der gegebenenfalls ein Computer zugeordnet ist.

Bei Anwendung des erfindungsgemäßen Verfahrens wird das zu analysierende Trägermedium, z.B. ein Aerosol oder eine Flüssigkeit, mittels geeigneter aero- bzw. hydrodynamischer Methoden durch den Zwischenraum 3 geführt. Das Trägermedium ist in der Zeichnung als Pfeil stilisiert. Zur Bestimmung der im gasförmigen oder flüssigen Trägermedium enthaltenen Partikel werden die drei Lichtquellen 4 aktiviert. Die Lichtstrahlen dieser Lichtquellen 4 sind auf ein gemeinsames Meßvolumen gerichtet. Die entsprechenden Laserstrahlen sind aus der Zeichnung ersichtlich. Der Schnittbereich von Laserstrahlen und Trägermedium muß sich im Zwischenraum 3 befinden, wobei dieser Bereich das Meßvolumen darstellt.

Gleichzeitig mit den drei Lichtquellen 4 werden auch die drei Detektoren 5 betrieben. Die von den Detektoren 5 erfaßten Streulicht-Meßwerte werden über die Auswerteeinheit 6 bzw. den Computer korreliert ausgewertet.

Die Detektoren werden beispielsweise so betrieben, daß jeder Detektor bezüglich des Streulichtes von lediglich einer, diesem Detektor zuordenbaren Lichtquelle ausgewertet wird. Alternativ ist vorgesehen, daß mindestens zwei Detektoren bezüglich des Streulichtes von einer gemeinsamen, diesen Detektoren zuordenbaren Lichtquelle ausgewertet werden. Ferner ist es möglich, daß ein Detektor bezüglich des Streulichtes von mindestens zwei, diesem Detektor zuordenbaren Lichtquellen ausgewertet wird. In jedem Fall können die Detektoren unter Verwendung modulierten Lichtes frequenzselektiv ausgewertet werden. Im übrigen ist es möglich, daß neben dem Streulicht auch die Extinktion des eingestrahlten Lichtes gemessen wird.

Die Lichtquellen werden mit Signalen unterschiedlicher Frequenzen und/oder unterschiedlicher Phasenbeziehung und/oder unterschiedlicher Modulationstiefe moduliert. Hierbei kann vorgesehen werden, daß mindestens zwei Lichtquellen mit den gleichen bzw. denselben Signalen moduliert werden. Weiterhin ist es möglich, daß mindestens eine Lichtquelle mit definierter Polarisation des Lichtes betrieben wird.

Durch die Verwendung mehrerer Lichtquellen, die räumlich um das Meßvolumen angeordnet sind, erfolgt die Beleuchtung des Meßvolumens und demzufolge die Beleuchtung der im Meßvolumen enthaltenen Partikel aus verschiedenen Raumwinkeln. Dadurch kann die Abweichung der Form des Partikels von der idealen Kugelform besser bestimmt werden, da sich für die verschiedenen Lichtstrahlen aus den um das Meßvolumen angeordneten Quellen ein anderer Streuquerschnitt mit dem Partikel ergibt. Mathematische Berechnungen oder Vergleiche mit Referenzdaten ermöglichen somit Rückschlüsse auf die Form und Art der Teilchen.

Durch die Anordnung der Lichtquellen lassen sich auch Randeffekte, die dadurch zustande kommen, daß ein Partikel durch eine Lichtquelle nur teilweise beleuchtet wird bzw. nur teilweise im Meßvolumen enthalten ist, rechnerisch eliminieren. Dies gilt ebenfalls für das Unterdrücken von Koinzidenzen, die von mehreren Partikeln, die einer gleichzeitigen Beleuchtung unterworfen sind, hervorgerufen werden. Durch das Überschneiden der verschiedenen, auf das Meßvolumen fokussierten Lichtstrahlen wird das Meßvolumen ohne notwendige Blenden oder ähnliche optische Hilfsmittel begrenzt, d.h., das Meßvolumen wird durch die sich überschneidenden Strahlen definiert. Durch die Bestrahlung des Meßvolumens mit mehreren Lichtquellen erhöht sich selbstverständlich auch die Intensität des eingestrahlten Lichtes, so daß auch kleinere Partikel noch detektiert werden können.

Die Modulation des einfallenden Lichtes ergibt die Möglichkeit, einerseits durch Verwendung von Lock-In-Technik das Signal-Rausch-Verhältnis deutlich zu verbessern und andererseits durch Verwendung verschiedener Frequenzen das entstandene Signal durch Messung des Streulichtes der Quelle genau zuordnen zu können. Durch den Einsatz von Lock-In-Verstärkertechnik können außerdem sehr schwache Signale der Lichtstreuung berücksichtigt werden. Somit wird es mit dem vorgeschlagenen Verfahren möglich, Partikel von sehr geringer Teilchengröße, die im Rayleigh-Streubereich liegen, meßtechnisch zu erfassen und zu klassifizieren.

Auch die gleichzeitige Verwendung von mehreren Lichtempfängern ist vorteilhaft. Die Empfänger sind, ebenso wie die Lichtquellen, räumlich um das Meßvolumen angeordnet. Das Auslesen dieser Detektoren, also das Messen des Streulichtes, erfolgt frequenzselektiv. Dabei finden einerseits die bekannten Vorteile der Lock-In-Verstärkertechnik Anwendung und andererseits ist es möglich, die Streulichtsignale eindeutig den Quellen des Lichtes zuzuordnen. Das bedeutet, jeder der um das Meßvolumen angeordneten Detektoren nimmt das Streulicht einer jeden Quelle auf, wobei entsprechend dem vorgeschlagenen Verfahren gleichzeitig das Streulicht einer Quelle von allen Detektoren winkelaufgelöst erfaßt wird und im gleichen Meßprozeß ein Detektor die Signale aller unter verschiedenen Winkeln angeordneten Lichtquellen selektiv erfaßt.

Die Messung des Streulichtes unter verschiedenen Winkeln in verschiedenen Streuebenen ist notwendig, um korrekte Aussagen über die Form der Teilchen treffen zu können, da speziell bei nichtsphärischen Partikeln das Streulicht sehr stark von der Orientierung des Partikels relativ zum einfallenden Strahl abhängt.

Die Erfassung aller beschriebenen Daten wird durch die Verwendung auf die Partikelgeschwindigkeit abgestimmter Modulationsfrequenzen in einem Zuge an jedem Partikel durchgeführt. Somit ermöglicht die korrelierte Auswertung aller erhaltenen Meßdaten die Bestimmung von Konzentration, Größe, Größenverteilung und Form der im zu analysierenden Trägermedium enthaltenen Partikel.

## Patentansprüche

1. Verfahren zur Bestimmung der in einem gasförmigen oder flüssigen Trägermedium enthaltenen Partikel mittels Streulichtmessung, dadurch gekennzeichnet,
daß mindestens drei, auf ein Meßvolumen gerichtete Lichtquellen und mindestens drei Detektoren gleichzeitig betrieben und die von den Detektoren erfaßten Streulicht-Meßwerte korreliert ausgewertet werden.

2. Verfahren nach Anspruch 1, dadurch gekennzeichnet,
daß jeder Detektor bezüglich des Streulichtes von lediglich einer, diesem Detektor zuordenbaren Lichtquelle ausgewertet wird.

3. Verfahren nach Anspruch 1, dadurch gekennzeichnet,
daß mindestens zwei Detektoren bezüglich des Streulichtes von einer gemeinsamen, diesen Detektoren zuordenbaren Lichtquelle ausgewertet werden.

4. Verfahren nach Anspruch 1, dadurch gekennzeichnet,
daß ein Detektor bezüglich des Streulichtes von mindestens zwei, diesem Detektor zuordenbaren Lichtquellen ausgewertet wird.

5. Verfahren nach Anspruch 1, dadurch gekennzeichnet,
daß die Lichtquellen mit Signalen unterschiedlicher Frequenzen moduliert werden.

6. Verfahren nach Anspruch 1, dadurch gekennzeichnet,
daß die Lichtquellen mit Signalen unterschiedlicher Phasenbeziehung moduliert werden.

7. Verfahren nach Anspruch 1, dadurch gekennzeichnet,
daß die Lichtquellen mit Signalen unterschiedlicher Modulationstiefe moduliert werden.

8. Verfahren nach Anspruch 1 und einem der Ansprüche 5 bis 7, dadurch gekennzeichnet,
daß mindestens zwei Lichtquellen mit den gleichen bzw. denselben Signalen moduliert werden.

9. Verfahren nach Anspruch 1, dadurch gekennzeichnet,
daß mindestens eine Lichtquelle mit definierter Polarisation des Lichtes betrieben wird.

10. Verfahren nach Anspruch 1 und einem der Ansprüche 5 bis 7, dadurch gekennzeichnet,
daß die Detektoren unter Verwendung modulierten Lichtes frequenzselektiv ausgewertet werden.

11. Verfahren nach Anspruch 1, dadurch gekennzeichnet,
daß neben dem Streulicht auch die Extinktion des eingestrahlten Lichtes gemessen wird.
